# EUROPEAN PATENT SPECIFICATION

(11) **EP 3 395 785 B1**
(45) Date of publication and mention of the grant of the patent: **02.06.2021**
(21) Application number: 18164956.7
(22) Date of filing: 29.03.2018
(51) Int. Cl.: C04B 41/89, F01D 11/00

(54) **SEAL COATING FOR CERAMIC MATRIX COMPOSITE**
DICHTUNGSBESCHICHTUNG FÜR KERAMISCHE MATRIXVERBUNDWERKSTOFFE
REVÊTEMENT D'ÉTANCHÉITÉ POUR COMPOSITE À MATRICE CÉRAMIQUE

(30) Priority: 28.04.2017 US 201715581499
(43) Date of publication of application: 31.10.2018
(73) Proprietor: Rolls-Royce Corporation, Indianapolis, Indiana 46225 (US); Rolls-Royce North American Technologies, Inc., Indianapolis, IN 46241 (US)
(72) Inventor: Shoemaker, Brian, Indianapolis, IN Indiana 46204 (US); Sippel, Aaron, Zionsville, IN Indiana 46077 (US); Freeman, Ted, Danville, IN Indiana 46122 (US)
(74) Representative: Rolls-Royce plc

(56) References cited:
- EP-A1- 2 236 650
- EP-A1- 3 135 866

## Description

### TECHNICAL FIELD

The present disclosure relates to seal coatings.

### BACKGROUND

Components of high-temperature mechanical systems, such as, for example, gas-turbine engines, operate in severe environments. The use of a ceramic or a ceramic matrix composite (CMC) substrate may allow for the components of high-temperature mechanical systems to have desired high-temperature mechanical, physical, and chemical properties.

Surfaces of ceramic or CMC components may possess a high degree of dimensional variability and high surface roughness when the components are unmachined. However, machining ceramic or CMC components may be a costly and time consuming task. Further, machining ceramic or CMC components may lead to adverse effects, such as, for example, environmental degradation of the material or damage to reinforcement material in a CMC component.

EP 3 135 866 A1 describes a coated seal slot system for turbomachinery that includes a first turbine component including a first groove having at least one first coating attached to at least a portion of the first groove. The coated seal slot system also includes a second turbine component including a second groove having at least one second coating attached to at least a portion of the second groove. The first and second turbine components are disposable adjacent to each other with the first groove having the first coating and the second groove having the second coating together forming a coated seal slot extending across a gap between the first turbine component and the second turbine component. A seal is disposable in the coated seal slot and extendable across the gap.

### SUMMARY

The present disclosure describes a system including a first component that includes a substrate including a ceramic or a CMC, a bond coat on the substrate, and a seal coating including at least one rare earth silicate on the bond coat. The substrate may comprise an unmachined surface. The system also includes a second component that defines a surface. The surface of the second component contacts the seal coating, and the first component and the second component are substantially stationary relative to each other.

The present disclosure describes a method that includes forming a bond coat on a substrate of a first component. The substrate may include a ceramic or a CMC. The substrate may comprise an unmachined surface. The method further includes forming a seal coating that includes at least one rare earth silicate on the bond coat. The method includes contacting a second component defining a surface to the seal coating, and the first component and the second component may be substantially stationary relative to each other.

In some examples, the present disclosure describes a system that includes a sealing segment of a gas turbine engine. The sealing segment may include a substrate including a ceramic or a CMC, a bond coat on the first surface of the substrate, and a seal coating including at least one rare earth silicate on the bond coat. The seal coating defines a thickness that is greater than an average surface roughness of the first surface of the substrate. The system may further include a retention member for the sealing segment, and the retention member may define a second surface that contacts the seal coating. The first component and the second component are substantially stationary relative to each other.

The details of one or more examples are set forth in the accompanying drawings and the description below. Other features, objects, and advantages will be apparent from the description and drawings, and from the claims.

### BRIEF DESCRIPTION OF DRAWINGS

FIG. 1 is a conceptual cross-sectional diagram illustrating an example system including a first component that includes a substrate including a ceramic or a CMC and a seal coating including at least one rare earth silicate, and a second component.
FIG. 2 is a conceptual cross-sectional diagram illustrating an example component including a bond coat and a seal coating including a first layer and a second layer.
FIG. 3 is a conceptual and schematic diagram illustrating a portion of an example gas turbine engine including a first component that includes a seal coating, and a second component that is in contact with the first component.
FIG. 4 is a conceptual and schematic diagram illustrating an enlarged portion of an example gas turbine engine including a first component that includes a seal coating, and a second component that is in contact with the first component.
FIG. 5 is a flow diagram illustrating an example technique for forming a system of the present disclosure including a first component that includes a seal coating and a second component that is in contact with the first component.

### DETAILED DESCRIPTION

The disclosure describes articles including seal coatings and technique for forming articles that include seal coatings. A seal coating may be on a surface of a first component to facilitate sealing between the first component and a second, adjacent component. For example, the seal coating may provide a smoother surface that may form an improved seal with an adjacent component compared to a rougher substrate of the first component.

The seal coatings may include a substantially fully dense layer. However, if the surface of the substrate is too rough, a single, substantially fully dense layer may be so thick to smooth surface roughness of the substrate that the dense layer may be more likely to spall due to internal stress. Hence, in some examples, such as when the substrate includes a high degree of surface roughness, the seal coating may include a first layer that is substantially fully dense and a second layer that has a higher porosity. The increased porosity of the second layer may allow for the seal coating to be thicker than a single layer seal coating, while mitigating the thermal strain on the seal coating. A thicker seal coating may allow the seal coating to be machined without machining substantially any of the substrate.

The seal coating includes at least one rare earth silicate. By including at least one rare earth silicate, the seal coating may provide environmental protection to the substrate including a ceramic or a CMC, e.g., by reducing contact of high temperature water vapor with the substrate including a ceramic or a CMC. In this way, the seal coating may function as both a seal coating and an environmental barrier coating.

In some examples, the seal coatings may be used on component of high temperature mechanical systems, such as gas turbine engines. For example, seal segments, or shrouds of a gas turbine engine, may be radially outboard of rotating blades of the gas turbine engine. Seal segments may be axially retained and held in place by one or more retention members. Without a relatively smooth seal surface on the interfaces of the seal segment and the one or more retention members, ingress of high-temperature gases from the hot gas flow path into surrounding areas of the engine and leakage of compressor discharge air may occur. The seal surface between the seal segment and the surrounding components may reduce or substantially prevent ingress of high-temperature gases and leakage of compressor discharge air, as well as improve efficiency.

In some examples, the seal segment or the retention members may be formed from a substrate that includes a ceramic or a CMC. The substrate may have a relatively high degree of surface roughness after fabrication of a component. As used herein, "average surface roughness" refers to the average of the heights and depths from the arithmetic mean elevation of the profile of a surface. Although machining the substrate that includes a ceramic or a CMC to form a smooth surface is possible, machining the substrate including a ceramic or a CMC is time-consuming and costly, and may damage the ceramic or CMC, e.g., damage reinforcement material in the CMC. The seal coatings described herein may be applied to ceramic or CMC substrates to provide a relatively smooth seal surface between two components that are substantially stationary relative to each other. In some implementations, the components may be components in a high-temperature mechanical system such as a seal segment and a retention member in a gas turbine engine. The seal coating may be applied to a substrate that includes a ceramic or a CMC that has an unmachined surface with a high degree of surface roughness, or may be applied to a machined surface with relatively lower degree of surface roughness. In either implementation, the seal coating can be machined to provide a relatively smooth sealing surface without damaging the substrate.

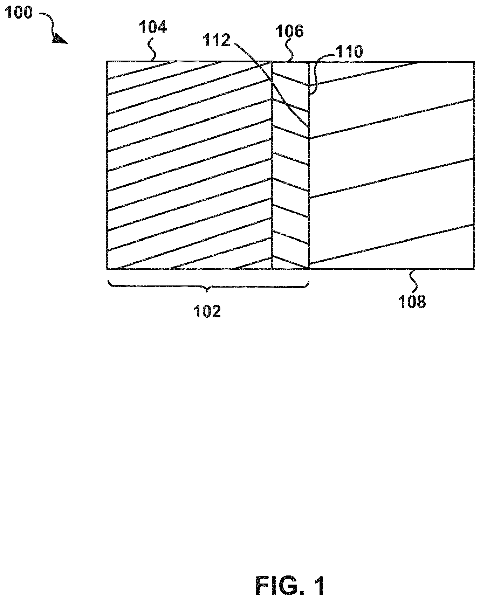

FIG. 1 is a conceptual cross-sectional diagram illustrating an example system 100 including a first component 102 and a second component 108. First component 102 includes a substrate 104 including a ceramic or a CMC and a seal coating 106 including at least one rare earth silicate. Second component 108 includes a second surface 110. Seal coating 106 contacts second surface 110, and first component 102 and second component 108 are substantially stationary relative to each other.

System 100 may include or be any component of a high temperature mechanical system, such as a gas turbine engine. In some examples, first component 102 and/or second component 108 may be or may be part of a seal segment, a retention member axially retaining a seal segment, a retention ring, an airfoil, or any other two components that are designed to remain substantially stationary relative to each other during use of system 100.

First component 102 and second component 108 are substantially stationary relative to each other. As used herein, the adverb "substantially" is used to indicate that the notion of "stationary" is a relative characterization and does not necessarily imply absolute requirements of "at rest." For example, first component 102 and second component 108 may be designed to be at rest relative to each other during use, but may experience vibration during use that causes some relative movement between first component 102 and second component 108. Relative movement between first component 102 and second component 108 may also be due to thermal expansion and/or contraction. First component 102 and second component 108 may experience thermal expansion and/or contraction during transient periods of operation, such as, for example, during machine start-up, during transition to maximum power output, or during shut-down. In some examples, the relative movement between first component 102 and second component 108 may be less than 5 mm, less than 1 mm, or the like. First component 102 and second component 108 may be static components, e.g., components not designed to rotate and/or translate relative to each other during use. In some implementations, first component 102 may be a seal segment of a gas turbine engine and second component 108 may be a retention member or a retention ring of a gas turbine engine. For instance, a first surface 112 of first component 102 may be an aft face of a seal segment rear hanger in contact with second surface 110, which may be a portion of the retention ring that contacts the aft face of the seal segment.

In some examples, second component 108 includes a super alloy, while in other examples, second component 108 includes a ceramic or a CMC. In examples in which second component 108 is a super alloy, second component 108 may include other additive elements to alter its mechanical properties, such as, toughness, hardness, temperature stability, corrosion resistance, oxidation resistance, and the like, as is well known in the art. In examples in which second component 108 includes a ceramic or a CMC, second component 108 may include any of the ceramics or CMCs described herein.

Substrate 104 includes a ceramic or CMC. A substrate 104 that includes a ceramic may include, for example, a silicon-containing ceramic, such as silica (SiO₂), silicon carbide (SiC) or silicon nitride (Si₃N₄); alumina (Al₂O₃), an aluminosilicate; a transition metal carbide or silicide (e.g., WC, Mo₂C, TiC, MoSi₂, NbSi₂, TiSi₂), or the like. In some examples, substrate 104 includes a mixture of two or more of SiC, Si₃N₄, aluminosilicate, silica, alumina, a transition metal carbide or silicide (e.g., WC, Mo₂C, TiC, MoSi₂, NbSi₂, TiSi₂), or the like. In some examples in which substrate 104 includes a ceramic, the ceramic may be substantially homogeneous.

In examples in which substrate 104 includes a CMC, substrate 104 may include a matrix material and a reinforcement material. The matrix material may include, for example, silicon metal or a ceramic material, such as SiC, silicon nitride (Si₃N₄), an aluminosilicate, silica (SiO₂), a transition metal carbide or silicide (e.g., WC, Mo₂C, TiC, MoSi₂, NbSi₂, TiSi₂), or other ceramics described herein. The CMC may further include a continuous or discontinuous reinforcement material. For example, the reinforcement material may include discontinuous whiskers, platelets, fibers, or particulates. As other examples, the reinforcement material includes a continuous monofilament or multifilament two-dimensional or three-dimensional weave. In some examples, the reinforcement material may include C, SiC, silicon nitride (Si₃N₄), an aluminosilicate, silica (SiO₂), a transition metal carbide or silicide (e.g. WC, Mo₂C, TiC, MoSi₂, NbSi₂, TiSi₂), another ceramic material described herein, or the like.

In some examples, the composition of the reinforcement material is the same as the composition of the matrix material. For example, a matrix material comprising silicon carbide may surround a reinforcement material including silicon carbide whiskers. In other examples, the reinforcement material includes a different composition than the composition of the matrix material, such as aluminosilicate fibers in an alumina matrix, or the like. One composition of substrate 104 that includes a CMC is a reinforcement material of silicon carbide continuous fibers embedded in a matrix material of silicon carbide. In some examples, substrate 104 includes a SiC-SiC CMC.

First component 102 also includes seal coating 106. Seal coating 106 may include at least one rare earth silicate. The at least one rare earth silicate may include any silicate of a rare earth element, including silicates of lutetium (Lu), ytterbium (Yb), thulium (Tm), erbium (Er), holmium (Ho), dysprosium (Dy), terbium (Tb), gadolinium (Gd), europium (Eu), samarium (Sm), promethium (Pm), neodymium (Nd), praseodymium (Pr), cerium (Ce), lanthanum (La), yttrium, (Y) and scandium (Sc). In some examples, the at least one rare earth silicate includes a silicate of ytterbium.

The at least one rare earth silicate may include at least one rare earth monosilicate (RESiO₅, where RE is a rare earth element), at least one rare earth disilicate (RE₂Si₂O₇, where RE is a rare earth element), or at least one rare earth monosilicate and at least one rare earth disilicate. Compared to a corresponding rare earth monosilicate, a rare earth disilicate may have a coefficient of thermal expansion that more closely matches a coefficient of thermal expansion of a substrate. Hence, having a rare earth disilicate adjacent to substrate 104 may reduce strain in seal coating 106 upon thermal cycling compared to a rare earth monosilicate. On the other hand, compared to a corresponding rare earth disilicate, a rare earth monosilicate may have better water vapor stability.

In some examples, in addition to the at least one rare earth silicate, seal coating 106 may include at least one of: at least one free rare earth oxide, free alumina, or free silica. For example, a rare earth silicate may be formed by reaction of silica and a rare earth oxide in a stoichiometric amount under sufficient reaction conditions. Unreacted silica, unreacted rare earth oxide, or both, may remain in seal coating 106, or may be intentionally added such that seal coating 106 includes free rare earth oxide, free silica, or both. Similarly, alumina may be added to seal coating 106 to modify mechanical and chemical properties of seal coating 106. In some examples, alumina may react with rare earth oxide and silica to form a rare earth aluminosilicate. In some examples, free (unreacted) alumina may be present in seal coating 106.

In some examples, seal coating 106 may include an additive or dopant in addition to the primary constituents of seal coating 106. For example, seal coating 106 may include at least one of TiO₂, Ta₂O₅, HfSiO₄, an alkali metal oxide, or an alkali earth metal oxide. The additive may be added to seal coating 106 to modify one or more desired properties of seal coating 106. For example, the additive components may increase or decrease the reaction rate of seal coating 106 with calcia-magnesia-aluminosilicate (CMAS), may modify the viscosity of the reaction product from the reaction of CMAS and seal coating 106, may increase adhesion of seal coating 106 to a bond coat, may increase or decrease the chemical stability of seal coating 106, or the like.

In some examples, seal coating 106 may be substantially free (e.g., free or nearly free) of hafnia and/or zirconia. Zirconia and hafnia may be susceptible to chemical attack by CMAS, so a seal coating substantially free of hafnia and/or zirconia may be more resistant to CMAS attack than a seal coating that includes zirconia and/or hafnia.

Regardless of the composition of seal coating 106, in some examples, seal coating 106 may have a substantially dense microstructure. In some examples, seal coating 106 with a substantially dense microstructure may have a porosity of less than 10 vol. %, such as less than 8 vol. %, less than 5 vol. %, or less than 2 vol. %, where porosity is measured as a percentage of pore volume divided by total volume of the seal coating, and may be measured using optical microscopy.

In examples in which seal coating 106 has a substantially dense microstructure, the thickness may be greater than 0 mm and less than 0.3 mm (0.012 inches), such as greater than 0 mm and less than 0.25 mm (0.0098 inches), or greater than 0 mm and less than 0.6 mm (0.0236 inches). As used herein, the "thickness" of seal coating 106 refers to the deposited thickness of seal coating 106, e.g., the thickness prior to any subsequent machining of seal coating 106.

Substrate 104 includes an average surface roughness. As used herein, "average surface roughness" refers to the average of the heights and depths from the arithmetic mean elevation of the profile of a surface. Average surface roughness may be measured using a profilometer, such as an interferometer or a laser scanning confocal microscope. Seal coating 106 may have a thickness greater than the average surface roughness of the unmachined surface of substrate 104. Seal coating 106 having a thickness greater than the average surface roughness of substrate 104 may allow seal coating 106 to be machined without damaging substrate 104, such that seal coating 106 may define an average surface roughness than substrate 104.

Seal coating 106 may be formed on first component 102 using, for example, thermal spraying, including, air plasma spraying, high velocity oxy-fuel (HVOF) spraying, low vapor plasma spraying; physical vapor deposition (PVD), including electron beam-PVD (EB-PVD), directed vapor deposition (DVD), and cathodic arc deposition; chemical vapor deposition (CVD); slurry process deposition; sol-gel process deposition; electrophoretic deposition; or the like.

Seal coating 106 may be applied during fabrication of the substrate including a ceramic or a CMC, or seal coating 106 may be applied after fabrication of the substrate including a ceramic or a CMC has been completed. For example, fabrication of the substrate including a ceramic or a CMC and application of seal coating 106 may occur in the same facility, e.g., may be performed by the same manufacturer. In other examples, fabrication of the substrate including a ceramic or a CMC may be completed in a first facility, application of seal coating 106 may occur in a second facility, e.g., fabrication of the substrate and seal coating 106 may be performed by the different manufacturers. This allows for the use of seal coating 106 on both new substrates including a ceramic or a CMC and on existing substrates including a ceramic or a CMC.

In some examples, seal coating 106 is repairable and/or replaceable. For example, if seal coating 106 were to become damaged, the damaged seal coating or a damaged portion of the seal coating may be removed and a new seal coating may be applied using, for example, air plasma spraying, CVD, other application methods described herein, or the like. By including seal coating 106, seal coating 106 may be machined to provide a relatively smooth surface while reducing or substantially eliminating damage to substrate 104 during machining. Further, ingress of high-temperature gases and leakage of compressor discharge air may be reduced or substantially prevented due to the better seal formed due to the lower average surface roughness, and efficiency of the system in which seal coating 106 is utilized may be increased due to a relatively smooth surface of seal coating 106.

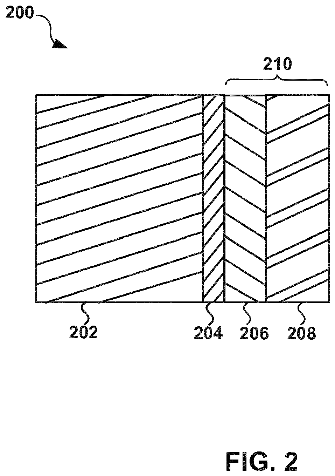

In some examples, first component 102 has a high degree of surface roughness, or it may be desirable to use a seal coating with a thickness greater than 0.3 mm (measured in a direction substantially normal to the surface of first component 102 to which seal coating 106 is applied). In some such examples, a seal coating may include a first layer with a first porosity, and a second layer with a second porosity greater than the first porosity. FIG. 2 is a conceptual cross-sectional diagram illustrating an example component 200 including a substrate 202, a bond coat 204, and a seal coating 210 including a first layer 206 and a second layer 208.

In examples in which substrate 202 has a high degree of surface roughness or a seal coating 210 with a thickness greater than 0.3 mm is to be utilized, seal coating 210 may include two layers. A two layer seal coating 210 may allow first layer 206 to have a substantially dense microstructure with a first porosity, and second layer 208 to have a substantially porous microstructure with a second porosity greater than the first porosity. The increased porosity of second layer 208 may allow seal coating 210 to be thicker than a single layer seal coating, without increasing the thermal strain within the coating during thermal cycling. A thicker seal coating may allow seal coating 210 to be machined while reducing or substantially eliminating damage to substrate 202.

Each of first and second layers 206 and 208 may include a composition similar to or substantially the same as seal coating 106 of FIG. 1. In some examples, first and second layers 206 and 208 may include similar or substantially the same composition. In other examples, first layer 206 and second layer 208 may include different compositions, e.g., first layer 206 may include at least one rare earth disilicate and second layer 208 may include at least one rare earth monosilicate.

In some examples, first layer 206 may have a substantially dense microstructure. For instance, first layer 206 may have a porosity of less than 10 vol. %, such as less than 8 vol. %, less than 5 vol. %, or less than 2 vol. %, where porosity is measured as a percentage of pore volume divided by total volume of the seal coating, and may be measured using optical microscopy or mercury porosimetry.

In examples in which seal coating 210 includes two layers, and first layer 206 has a substantially dense microstructure, the thickness of first layer 206 may be greater than 0 mm and less than 0.3 mm (0.012 inches), such as greater than 0 mm and less than 0.25 mm (0.0098 inches), or greater than 0 mm and less than 0.6 mm (0.0236 inches). As used herein, the "thickness" of first layer 206 refers to the deposited thickness of first layer 206, e.g., the thickness prior to any subsequent machining of first layer 206.

In some examples, second layer 208 may include a substantially porous microstructure. For instance, second layer 208 may include a porosity of more than 10 vol. %, such as more than 15 vol. %, more than 20 vol. %, or more than 30 vol. %, where porosity is measured as a percentage of pore volume divided by total volume of the seal coating, and may be measured using optical microscopy. In some examples, second layer 208 has a porosity between 10 vol. % and 35 vol. %, between 35 vol. % and 45 vol. %, 20 vol. %, or 40 vol. %.

Porosity of second layer 208 may be controlled by the use of coating material additives and/or processing techniques to create the desired porosity. In some examples, second layer 208 may include substantially closed pores.

For example, a coating material additive that melts or burns at the use temperatures of the component (e.g., seal segment) may be incorporated into the coating material that forms second layer 208. The coating material additive may include, for example, graphite, hexagonal boron nitride, or a polymer such as a polyester, and may be incorporated into the coating material prior to deposition of the coating material over substrate 202 or over first layer 206 to form second layer 208. The coating material additive then may be melted or burned off in a post-formation heat treatment, or during operation of component 202, to form pores in second layer 208. The post-deposition heat-treatment may be performed at temperatures up to 1500°C.

The porosity of second layer 208 can also be created and/or controlled by plasma spraying the coating material using a co-spray process technique in which the coating material and coating material additive are fed into the plasma stream with two radial powder feed injection ports. The feed pressures and flow rates of the coating material and coating material additive may be adjusted to inject the material on the outer edge of the plasma plume using direct 90 degree angle injection. This may permit the coating material particles to soften but not completely melt and the coating material additive to not burn off but rather soften sufficiently for adherence in second layer 208.

In some examples in which seal coating 210 includes two layers, and second layer 208 has a substantially porous microstructure, the thickness of second layer 208 may be greater than the thickness of first layer 206. For example, second layer 208 may define a thickness greater than the thickness of first layer 206, which thickness may be greater than 0 mm and less than 3 mm (0.12 inches), such as between 0.3 mm (0.012 inches) and 3 mm (0.12 inches), between 1 mm (0.039 inches) and 2 mm (0.079 inches), or 1.5 mm (0.059 inches). As used herein, the "thickness" of second layer 208 refers to the deposited thickness of second layer 208, e.g., the thickness prior to any subsequent machining of second layer 208.

Seal coating 210 may have a total thickness including the combined thicknesses of first layer 206 and second layer 208. In some examples, the total thickness of seal coating 210 may be greater than 0 mm and less than 3.3 mm (0.13 inches), such as between 0.25 mm (0.0098 inches) and 2.25 mm (0.089 inches) or between 0.1 mm (0.0039 inches) and 1.6 mm (0.063 inches). As used herein, the "thickness" of seal coating 210 refers to the deposited thickness of seal coating 210, e.g., the thickness prior to any subsequent machining of seal coating 210. The total thickness of seal coating 210 is greater than an average surface roughness of substrate 202, such as at least 10% greater than an average surface roughness of substrate 202, at least 25% greater than an average surface roughness of substrate 202, at least 50% greater than an average surface roughness of substrate 202, or the like.

A porous microstructure in second layer 208 may allow a second component that contacts seal coating 210 (e.g., second component 108 illustrated in FIG. 1) to wear slightly into second layer 208 of seal coating 210. The wearing of second layer 208 may allow component 200 and a second component to be in more intimate contact, which may improve the seal between component 200 and the second component. In some examples, the seal between second layer 208 with a porous microstructure and the second component is improved relative to a seal between two rigid components (e.g., two components without a seal coating). In other examples, the seal between second layer 208 with a porous microstructure and the second component is improved relative to a seal between a seal coating with a dense microstructure and the second component.

Component 200 includes a bond coat 204. Bond coat 204 may improve adhesion between substrate 202 and first layer 206. Bond coat 204 may include any useful material that improves adhesion between the substrate and first layer 206.

Bond coat 204 may include a ceramic or another material that is compatible with the substrate. For example, bond coat 204 may include mullite (aluminum silicate, Al₆Si₂O₁₃), silicon, silica, a silicide, or the like. Bond coat 204 may further include other elements, such as oxides or silicates of rare earth elements including lutetium (Lu), ytterbium (Yb), thulium (Tm), erbium (Er), holmium (Ho), dysprosium (Dy), terbium (Tb), gadolinium (Gd), europium (Eu), samarium (Sm), promethium (Pm), neodymium (Nd), praseodymium (Pr), cerium (Ce), lanthanum (La), yttrium, (Y) and scandium (Sc).

The composition of bond coat 204 may be selected based on a number of considerations, including the chemical composition and phase constitution of the substrate and first layer 206. For example, when the substrate includes a CMC, bond coat 204 may be silicon or a ceramic, such as mullite. The use of materials in bond coat 204 that provide a better coefficient of thermal expansion match to the composition of substrate 202 may result in increased mechanical stability and adhesion of bond coat 204 to substrate 202.

In some examples, bond coat 204 may include multiple layers. For example, in some examples where substrate 202 is a CMC including silicon carbide, bond coat 204 includes a layer of silicon on substrate 204 followed by a layer of mullite, a rare earth silicate, or a mullite/rare earth silicate dual layer on the layer of silicon. Bond coat 204 including multiple layers may be desirable when substrate 202 includes a CMC to accomplish multiple desired functions of bond coat 204, such as, for example, adhesion of substrate 202 to first layer 206, chemical compatibility of bond coat 204 with each of substrate 202 and first layer 206, a desirable coefficient of thermal expansion match between adjacent layers, or the like.

Bond coat 204 may be formed on the substrate using, for example, CVD; PVD, including EB-PVD and DVD; plasma spraying or another thermal spraying process, or the like.

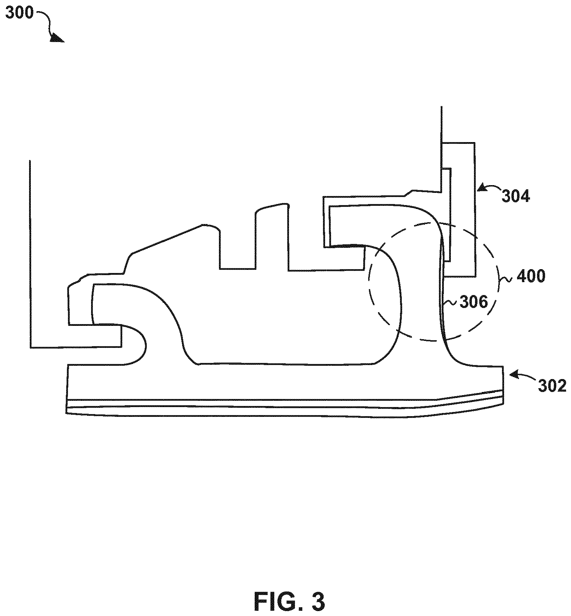

As described briefly above, the seal coating of the present disclosure may be used on or on a portion of components of high-temperature mechanical systems, such as, for example, a gas turbine engine, as depicted in the conceptual and schematic diagram illustrated in FIG. 3.

System 300 may be a gas turbine engine or a portion of a gas turbine engine, or another high-temperature mechanical system or portion of another high-temperature mechanical system. System 300 includes, among other components, a first component 302 and a second component 304. First component 302 and second component 304 are substantially stationary relative to each other during use of system 300. For instance, first component 302 may be an aft face of a seal segment rear hanger in contact with second component 304, which may be a portion of the retention ring that contacts the aft face of the seal segment.

In some examples, second component 304 is or is part of a retention ring that may retain first component 302. In other examples, second component 304 may be or may be a part of a seal segment, a retention member axially retaining a seal segment, an airfoil, or any other component that is designed to remain substantially stationary relative to first component 302 during use of system 300.

In some examples, first component 302 is or is part of a seal segment, or shroud, radially outboard a rotating blade. In other examples, first component 302 may be or may be a part of a retention member axially retaining a seal segment, a retention ring, an airfoil, or any other component that is designed to remain substantially stationary relative to second component 304 during use of system 300.

First component 302 includes seal coating 306. Seal coating 306 is in contact with second component 304. Seal coating 306 may be a single layer coating, may include multiple layers, or other have configurations as described herein. For example, seal coating 302 may be similar to or substantially the same as seal coating 106 illustrated in FIG. 1 or seal coating 210 illustrated in FIG. 2.

Contact between second component 304 and seal coating 306 may be intentional for at least some of the temperatures experienced by system 300. For example, first component 302 may experience thermal expansion when heated to its operating temperature from the temperature when the system 300 is not in use. At the same time, second component 304 may also undergo thermal expansion when heated to the operating temperature. The thermal expansion experienced by first component 302 and second component 304 may result in a change in distance between first component 302 and second component 304. In some examples, second component 304 approximately contacts seal coating 306 at a low temperature, such as a minimum operating temperature or a temperature of the surrounding environment when the system 300 is not operating. In other examples, second component 304 approximately contacts seal coating 306 at the operating temperature of system 300.

Second component 304 may wear slightly into seal coating 306. The wearing of seal coating 306 may cause first component 302 and second component 304 to be in contact more completely. The increased interfacial contact may improve the seal between first component 302 and second component 304. In some examples, the seal between first component 302 and second component 304 is improved relative to a seal between two rigid components (e.g., two components without a seal coating). In other examples, second component 304 may not wear into seal coating 306. The presence of seal coating 306 between first component 302 and second component 304 may still improve the seal between the components even if second component 304 does not wear into seal coating 306, as seal coating 306 may include a smoother surface than first component 302.

The presence of seal coating 306 may reduce or substantially prevent ingress of high-temperature gases and leakage of compressor discharge air and improve efficiency of system 300, and may allow machining of seal coating 306 while reducing or substantially preventing damage to first component 302.

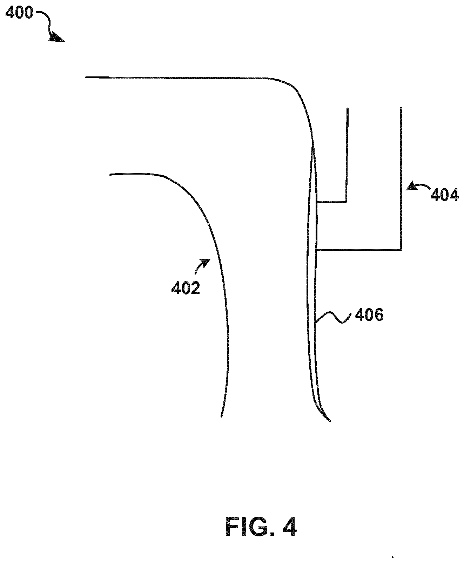

FIG. 4 is a conceptual and schematic diagram illustrating an enlarged view of a portion of an example gas turbine engine including a first component 402 that includes a seal coating 406, and a second component 404 that is in contact with first component 402. System 400 of FIG. 4 may be an enlarged view of a portion of a gas turbine engine or a portion of another high-temperature mechanical system, e.g., the encircled area 400 from FIG. 3.

System 400 includes, among other components, a first component 402 and a second component 404. First component 402 and second component 404 are substantially stationary relative to each other during use of system 400. For instance, first component 402 may be an aft face of a seal segment rear hanger in contact with second component 404, which may be a portion of the retention ring that contacts the aft face of the seal segment.

In some examples, second component 404 is or is part of a retention ring that may retain first component 402. In other examples, second component 404 may be or may be a part of a seal segment, a retention member axially retaining a seal segment, an airfoil, or any other component that is designed to remain substantially stationary relative to first component 402 during use of system 400.

In some examples, first component 402 is or is part of a seal segment, or shroud, radially outboard a rotating blade. In other examples, first component 402 may be or may be a part of a retention member axially retaining a seal segment, a retention ring, an airfoil, or any other component that is designed to remain substantially stationary relative to second component 404 during use of system 400.

First component 402 includes seal coating 406. Seal coating 406 may be in contact with second component 404. Seal coating 406 may be a single layer coating, may include multiple layers, or other have configurations as described herein. For example, seal coating 402 may be similar to or substantially the same as seal coating 106 illustrated in FIG. 1 or seal coating 210 illustrated in FIG. 2.

Contact between second component 404 and seal coating 406 is intentional for at least some of the temperatures experienced by system 400. For example, first component 402 may experience thermal expansion when heated to its operating temperature from the temperature when the system 400 is not in use. At the same time, second component 404 may also undergo thermal expansion when heated to the operating temperature. The thermal expansion experienced by first component 402 and second component 404 may result in a change in distance between first component 402 and second component 404. In some examples, second component 404 approximately contacts seal coating 406 at a low temperature, such as a minimum operating temperature or a temperature of the surrounding environment when the system 400 is not operating. In other examples, second component 404 approximately contacts seal coating 406 at the operating temperature of system 400.

Second component 404 may wear slightly into seal coating 406. The wearing of seal coating 406 may cause first component 402 and second component 404 to be in contact more completely. The increased interfacial contact may improve the seal between first component 402 and second component 404. In some examples, the seal between first component 402 and second component 404 is improved relative to a seal between two rigid components (e.g., two components without a seal coating). In other examples, second component 404 may not wear into seal coating 406. The presence of seal coating 406 between first component 402 and second component 404 may still improve the seal between the components even if second component 404 does not wear into seal coating 406, as seal coating 406 may include a smoother surface than first component 402.

The presence of seal coating 406 may reduce or substantially prevent ingress of high-temperature gases and leakage of compressor discharge air and improve efficiency of system 400, and may allow machining of seal coating 406 while reducing or substantially preventing damage to first component 402.

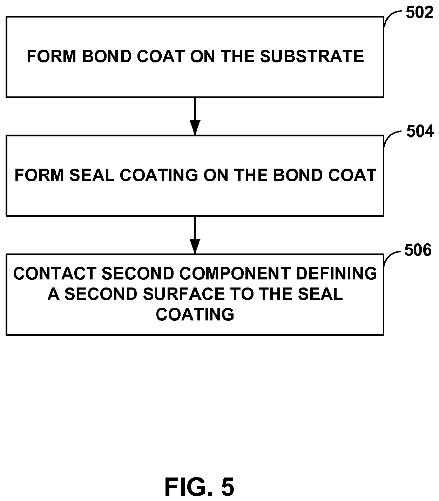

FIG. 5 is a flow diagram illustrating an example technique for forming a system of the present disclosure including a first component that includes a seal coating, and a second component that is in contact with the first component. The technique of FIG. 5 will be described with respect to system 100 of FIG. 1 and system 200 of FIG. 2 for ease of description only. A person having ordinary skill in the art will recognize and appreciate that the technique of FIG. 5 may be used to form systems other than system 100 of FIG. 1 or system 200 of FIG. 2.

Although not shown in FIG. 5, in some examples, the technique may optionally include machining a surface of substrate 202 prior to forming bond coat 204 on substrate 202. Machining the surface of substrate 202 may reduce surface roughness of substrate 202. Machining may include any suitable mechanical, thermal, or chemical, process, including, for example, grinding, polishing, etching, laser ablation, chemical mechanical polishing, or the like. In other examples, substrate 202 may be left unmachined or substantially unmachined.

The technique of FIG. 5 also includes forming bond coat 204 on substrate 202 of a first component 200 that includes a ceramic or a CMC (502). Bond coat 204 may be formed on substrate 202 using, for example, CVD; PVD, including EB-PVD and DVD; plasma spraying or another thermal spraying process, or the like.

Bond coat 204 may be formed on a relatively smooth surface of a substrate, on substrate 202 with a high-degree of surface roughness, or on substrate 202 with a surface roughness between relatively smooth and high-degree of surface roughness.

The technique of FIG. 5 may further include, after forming bond coat 204 on substrate 202, forming seal coating 106 or 210 on bond coat 204 (504). Seal coating 106, 210 includes at least one rare earth silicate. The at least one rare earth silicate may include any silicate of a rare earth element, including silicates of lutetium (Lu), ytterbium (Yb), thulium (Tm), erbium (Er), holmium (Ho), dysprosium (Dy), terbium (Tb), gadolinium (Gd), europium (Eu), samarium (Sm), promethium (Pm), neodymium (Nd), praseodymium (Pr), cerium (Ce), lanthanum (La), yttrium, (Y) and scandium (Sc). In some examples, the at least one rare earth silicate includes a silicate of ytterbium. As described above, seal coating 106 or 206 may include a single, substantially dense layer or may include a first, substantially dense layer and a second, substantially porous layer.

The technique of FIG. 5 also may optionally include machining seal coating 106 or 210 to satisfy a predetermined dimensional tolerance (e.g., average surface roughness) for first component 102 or 200. Machining may include any suitable mechanical, thermal, or chemical, process, including, for example, grinding, polishing, etching, laser ablation, chemical mechanical polishing, or the like. In some examples, machining seal coating 106 or 210 may reduce the thickness of seal coating 106 or 210. As used herein, the "thickness" of seal coating 106 or 210 refers to the deposited thickness of seal coating 106 or 210, e.g., the thickness prior to any subsequent machining of seal coating 106 or 210.

Seal coating 106 or 210 may be machined while reducing or substantially preventing any damage to substrate 104 or 202.

In some examples, the technique of FIG. 5 may optionally include repairing a damaged portion of the seal coating 106 or 210. For example, if seal coating 106 or 206 is damaged during use, the damaged seal coating or a damaged portion of the seal coating may be removed and a new seal coating deposited on substrate 104 or 202 using, for example, air plasma spraying, CVD, other application methods described herein, or the like.

The technique of FIG. 5 further includes contacting second component 108 defining a second surface 110 to the seal coating 106 or 206 (506). Second component 108 may be or may be a part of a retention member axially retaining a seal segment, a retention ring, an airfoil, or any other component that is designed to remain substantially stationary relative to first component 102 during use of system 100. In some examples, second component 108 is or is part of a seal segment, or shroud, radially outboard a rotating blade. In other examples, second component 108 is a retention member for a seal segment, such as, for example, a retention ring. For instance, one of first component 102 or second component 108 may be a seal segment of a gas turbine engine, and the other of first component 102 or second component 108 may be a retention member for the sealing segment.

Contacting second component 108 to seal coating 106, 206 may be intentional for at least some of the temperatures experienced by system 100. For example, first component 102 may experience thermal expansion when heated to its operating temperature from the temperature when system 100 is not in use. At the same time, second component 108 may also undergo thermal expansion when heated to the operating temperature. The thermal expansion experienced by first component 102 and second component 108 may result in a change in distance between first component 102 and second component 108. In some examples, second component 108 is positioned to contact seal coating 106, 206 at a low temperature, such as a minimum operating temperature or a temperature of the surrounding environment when system 100 is not operating. In other examples, second component 108 is positioned to contact seal coating 106 or 206 at the operating temperature of system 100.

In this way, the seal coatings described herein may be applied to ceramic or CMC substrates to provide a relatively smooth seal surface between two components that are substantially stationary relative to each other. In some implementations, the components may be components in a high-temperature mechanical system such as a seal segment and a retention member in a gas turbine engine. The seal coating may be applied to a substrate that includes a ceramic or a CMC that has an unmachined surface with a high degree of surface roughness, or may be applied to a machined surface with relatively lower degree of surface roughness. In either implementation, the seal coating can be machined to provide a relatively smooth sealing surface without damaging the substrate.

Various examples have been described. These and other examples are within the scope of the following claims.

## Claims

1. A system comprising:
a first component (102, 200) comprising:
a substrate (104,202) defining a first surface (112) and comprising a ceramic or a ceramic matrix composite;
a bond coat (204) on the substrate (104) ; and
a seal coating (106, 210) comprising at least one rare earth silicate on the bond coat (204),
wherein the seal coating (106,210) defines a thickness that is greater than an average surface roughness of the first surface (112) of the substrate (104, 202) ; and
a second component (108) defining a second surface (110), wherein the second surface (110) of the second component (108) contacts the seal coating (106,210), and wherein the first component (102,200) and the second component (108) are substantially stationary relative to each other.

2. The system of claim 1, wherein the seal coating (106,210) comprises a first layer (206) comprising a first porosity and a second layer (208) comprising a second porosity, wherein the first layer (206) is between the bond coat (204) and the second layer (208), and wherein the second porosity is greater than the first porosity.

3. The system of claim 2, wherein the first layer (206) defines a first thickness, wherein the first thickness is greater than 0 mm and less than 0.6 mm, and the second layer (208) defines a second thickness, wherein the second thickness is greater than 0 mm and less than 3 mm.

4. The system of claim 2 or 3, wherein the second thickness is greater than the first thickness.

5. The system of any of claims 2 to 4, wherein the second layer (208) has a porosity between 10 volume percent and 35 volume percent.

6. The system of any preceding claim, wherein one of the first component (102) or the second component (108) comprises a sealing segment of a gas turbine engine, and wherein the other of the first component (102) or the second component (108) comprises a retention component for the sealing segment.

7. A method comprising:
forming a bond coat (204) on a substrate (104, 202) of a first component (102,200), wherein the substrate (104,202) defines a first surface (112) and comprises a ceramic or a ceramic matrix composite;
forming a seal coating (106,210) comprising at least one rare earth silicate on the bond coat (204), wherein the seal coating (106,210) defines a thickness that is greater than an average surface roughness of the first surface (112) of the substrate (104,202) ; and
contacting a second component (108) defining a second surface (110) to the seal coating (106), wherein the first component (102) and the second component (108) are substantially stationary relative to each other.

8. The method of claim 7, wherein forming the seal coating (106,210) comprises forming a first layer (206) comprising a first porosity on the bond coat (204) and forming a second layer (208) comprising a second porosity on the first layer (206), wherein the second porosity is greater than the first porosity.

9. The method of claim 8, wherein the first layer (206) defines a first thickness, wherein the first thickness is greater than 0 mm and less than 0.6 mm, and the second layer (208) defines a second thickness, wherein the second thickness is greater than 0 mm and less than 3 mm.

10. The method of claim 9, wherein the second thickness is greater than the first thickness.

11. The method of any of claim 8 to 10, wherein the second layer (208) has a porosity between 10 volume percent and 35 volume percent.

12. The method of claim 7 to 11, wherein the first component (102,200) and the second component (108) comprise static components.

13. The method of claim 7 to 12, further comprising, prior to forming the bond coat (204) on the substrate (104,202), machining a surface of the substrate (104,202) .

14. The method of claim 7 to 13, further comprising machining the seal coating (106,210) to satisfy a predetermined dimensional tolerance for the first component (102,200) .

15. The method of claim 7 to 14, further comprising repairing a damaged portion of the seal coating (106,210).

## Patentansprüche

1. System, umfassend:
eine erste Komponente (102, 200), umfassend;
ein Substrat (104, 202), das eine erste Oberfläche (112) definiert und eine Keramik oder einen Keramikmatrixverbundstoff umfasst;
eine Bindeschicht (204) auf dem Substrat (104); und
eine Dichtungsbeschichtung (106, 210), umfassend zumindest ein Seltenerdsilikat auf der Bindeschicht (204),
wobei die Dichtungsbeschichtung (106, 210) eine Dicke definiert, die größer als eine durchschnittliche Oberflächenrauheit der ersten Oberfläche (112) des Substrats (104, 202) ist; und
eine zweite Komponente (108), die eine zweite Oberfläche (110) definiert, wobei die zweite Oberfläche (110) der zweiten Komponente (108) die Dichtungsbeschichtung (106, 210) kontaktiert, und wobei die erste Komponente (102, 200) und die zweite Komponente (108) im Wesentlichen stationär relativ zueinander sind.

2. System nach Anspruch 1, wobei die Dichtungsbeschichtung (106, 210) eine erste Schicht (206), die eine erste Porosität umfasst, und eine zweite Schicht (208) umfasst, die eine zweite Porosität umfasst, wobei die erste Schicht (206) zwischen der Bindeschicht (204) und der zweiten Schicht (208) ist, und wobei die zweite Porosität größer als die erste Porosität ist.

3. System nach 2, wobei die erste Schicht (206) eine erste Dicke definiert, wobei die erste Dicke größer als 0 mm und kleiner als 0,6 mm ist, und die zweite Schicht (208) eine zweite Dicke definiert, wobei die zweite Dicke größer als 0 mm und kleiner als 3 mm ist.

4. System nach Anspruch 2 oder 3, wobei die zweite Dicke größer als die erste Dicke ist.

5. System nach einem der Ansprüche 2 bis 4, wobei die zweite Schicht (208) eine Porosität zwischen 10 Volumenprozent und 35 Volumenprozent aufweist.

6. System nach einem vorhergehenden Anspruch, wobei eine von der ersten Komponente (102) oder der zweiten Komponente (108) ein Dichtungssegment eines Gasturbinentriebwerks umfasst, und wobei die andere von der ersten Komponente (102) oder der zweiten Komponente (108) eine Rückhaltekomponente für das Dichtungssegment umfasst.

7. Verfahren, umfassend:
Bilden einer Bindeschicht (204) auf einem Substrat (104, 202) einer ersten Komponente (102, 200), wobei das Substrat (104, 202) eine erste Oberfläche (112) definiert und eine Keramik oder einen Keramikmatrixverbundstoff umfasst;
Bilden einer Dichtungsbeschichtung (106, 210), umfassend zumindest ein Seltenerdsilikat auf der Bindeschicht (204), wobei die Dichtungsbeschichtung (106, 210) eine Dicke definiert, die größer als eine durchschnittliche Oberflächenrauheit der ersten Oberfläche (112) des Substrats (104, 202) ist; und
Kontaktieren einer zweiten Komponente (108), die eine zweite Oberfläche (110) definiert, mit der Dichtungsbeschichtung (106), wobei die erste Komponente (102) und die zweite Komponente (108) im Wesentlichen stationär relativ zueinander sind.

8. Verfahren nach Anspruch 7, wobei das Bilden der Dichtungsbeschichtung (106, 210) das Bilden einer ersten Schicht (206), die eine erste Porosität umfasst, auf der Bindeschicht (204) und das Bilden einer zweiten Schicht (208), die eine zweite Porosität umfasst, auf der ersten Schicht (206) umfasst, wobei die zweite Porosität größer als die erste Porosität ist.

9. Verfahren nach Anspruch 8, wobei die erste Schicht (206) eine erste Dicke definiert, wobei die erste Dicke größer als 0 mm und kleiner als 0,6 mm ist, und die zweite Schicht (208) eine zweite Dicke definiert, wobei die zweite Dicke größer als 0 mm und kleiner als 3 mm ist.

10. Verfahren nach Anspruch 9, wobei die zweite Dicke größer als die erste Dicke ist.

11. Verfahren nach einem der Ansprüche 8 bis 10, wobei die zweite Schicht (208) eine Porosität zwischen 10 Volumenprozent und 35 Volumenprozent aufweist.

12. Verfahren nach Anspruch 7 bis 11, wobei die erste Komponente (102, 200) und die zweite Komponente (108) statische Komponenten umfassen.

13. Verfahren nach Anspruch 7 bis 12, ferner umfassend, vor dem Bilden der Bindeschicht (204) auf dem Substrat (104, 202), das Bearbeiten einer Oberfläche des Substrats (104, 202).

14. Verfahren nach Anspruch 7 bis 13, ferner umfassend das Bearbeiten der Dichtungsbeschichtung (106, 210), um eine vorbestimmte Maßtoleranz für die erste Komponente (102, 200) zu erfüllen.

15. Verfahren nach Anspruch 7 bis 14, ferner umfassend das Reparieren eines beschädigten Teils der Dichtungsbeschichtung (106, 210).

## Revendications

1. Système comprenant :
un premier composant (102, 200) comprenant :
un substrat (104, 202) définissant une première surface (112) et comprenant une céramique ou un composite à matrice céramique ;
une couche d'accrochage (204) sur le substrat (104) ; et
un revêtement d'étanchéité (106, 210) comprenant au moins un silicate de terre rare sur la couche d'accrochage (204), ledit revêtement d'étanchéité (106, 210) définissant une épaisseur qui est supérieure à une rugosité de surface moyenne de la première surface (112) du substrat (104, 202) ; et
un second composant (108) définissant une seconde surface (110), ladite seconde surface (110) du second composant (108) étant en contact avec le revêtement d'étanchéité (106, 210), et ledit premier composant (102, 200) et ledit second composant (108) étant sensiblement stationnaires l'un par rapport à l'autre.

2. Système selon la revendication 1, ledit revêtement d'étanchéité (106, 210) comprenant une première couche (206) comprenant une première porosité et une seconde couche (208) comprenant une seconde porosité, ladite première couche (206) étant entre la couche d'accrochage (204) et la seconde couche (208), et ladite seconde porosité étant supérieure à la première porosité.

3. Système selon la revendication 2, ladite première couche (206) définissant une première épaisseur, ladite première épaisseur étant supérieure à 0 mm et inférieure à 0,6 mm, et ladite seconde couche (208) définissant une seconde épaisseur, ladite seconde épaisseur étant supérieure à 0 mm et inférieure à 3 mm.

4. Système selon la revendication 2 ou 3, ladite seconde épaisseur étant supérieure à la première épaisseur.

5. Système selon l'une quelconque des revendications 2 à 4, ladite seconde couche (208) possédant une porosité comprise entre 10 pour cent en volume et 35 pour cent en volume.

6. Système selon une quelconque revendication précédente, l'un du premier composant (102) ou du second composant (108) comprenant un segment d'étanchéité d'un moteur à turbine à gaz, et ledit autre du premier composant (102) ou du second composant (108) comprenant un élément de retenue pour le segment d'étanchéité.

7. Procédé comprenant :
la formation d'une couche d'accrochage (204) sur un substrat (104, 202) d'un premier composant (102,200), ledit substrat (104,202) définissant une première surface (112) et comprenant une céramique ou un composite à matrice céramique ;
la formation d'un revêtement d'étanchéité (106, 210) comprenant au moins un silicate de terre rare sur la couche d'accrochage (204), ledit revêtement d'étanchéité (106, 210) définissant une épaisseur qui est supérieure à une rugosité de surface moyenne de la première surface (112) du substrat (104, 202) ; et la mise en contact d'un second composant (108) définissant une seconde surface (110) avec le revêtement d'étanchéité (106), ledit premier composant (102) et ledit second composant (108) étant sensiblement stationnaires l'un par rapport à l'autre.

8. Procédé selon la revendication 7, ladite formation du revêtement d'étanchéité (106, 210) comprenant la formation d'une première couche (206) comprenant une première porosité sur la couche d'accrochage (204) et ladite formation d'une seconde couche (208) comprenant une seconde porosité sur la première couche (206), ladite seconde porosité étant supérieure à la première porosité.

9. Procédé selon la revendication 8, ladite première couche (206) définissant une première épaisseur, ladite première épaisseur étant supérieure à 0 mm et inférieure à 0,6 mm, et ladite seconde couche (208) définissant une seconde épaisseur, ladite seconde épaisseur étant supérieure à 0 mm et inférieure à 3 mm.

10. Procédé selon la revendication 9, ladite seconde épaisseur étant supérieure à la première épaisseur.

11. Procédé selon l'une quelconque des revendications 8 à 10, ladite seconde couche (208) possédant une porosité comprise entre 10 pour cent en volume et 35 pour cent en volume.

12. Procédé selon les revendications 7 à 11, ledit premier composant (102, 200) et ledit second composant (108) comprenant des composants statiques.

13. Procédé selon les revendications 7 à 12, comprenant en outre, avant la formation de la couche d'accrochage (204) sur le substrat (104, 202), l'usinage d'une surface du substrat (104, 202).

14. Procédé selon les revendications 7 à 13, comprenant en outre l'usinage du revêtement d'étanchéité (106, 210) pour satisfaire une tolérance dimensionnelle prédéfinie pour le premier composant (102, 200).

15. Procédé selon les revendications 7 à 14, comprenant en outre la réparation d'une partie endommagée du revêtement d'étanchéité (106, 210).
